# EUROPEAN PATENT SPECIFICATION

(11) **EP 3 994 485 B1**
(45) Date of publication and mention of the grant of the patent: **08.05.2024**
(21) Application number: 20735414.3
(22) Date of filing: 03.07.2020
(51) Int. Cl.: G01S 7/4865, G01S 17/894, G01S 17/931, G01S 7/4915, G01S 7/4912, G01S 7/48, G01S 7/481, G01S 7/484, G01S 7/4911, G01S 7/4914, G01S 7/497, G01S 17/10, G01S 17/36, G01S 17/89

(54) **TIME-OF-FLIGHT SENSING CIRCUITRY WITH DIFFERENT IMAGING MODES AND METHOD FOR OPERATING SUCH A TIME-OF-FLIGHT SENSING CIRCUITRY**
FLUGZEITERFASSUNGSSCHALTUNG MIT VERSCHIEDENEN ABBILDUNGSMODI UND VERFAHREN ZUM BETRIEB EINER SOLCHEN FLUGZEITERFASSUNGSSCHALTUNG
CIRCUIT DE DÉTECTION DE TEMPS DE VOL AVEC DIFFÉRENTS MODES D'IMAGERIE ET PROCÉDÉ DE FONCTIONNEMENT D'UN TEL CIRCUIT DE DÉTECTION DE TEMPS DE VOL

(30) Priority: 05.07.2019 EP 19184651
(43) Date of publication of application: 11.05.2022
(73) Proprietor: Sony Semiconductor Solutions Corporation, Atsugi-shi Kanagawa 243-0014 (JP); Sony Depthsensing Solutions SA/NV, 1050 Ixelles (Brussels) (BE)
(72) Inventor: GIL-CACHO, Pepe, 70327 Stuttgart (DE); DEGRAUX, Kevin, 70327 Stuttgart (DE); CAMBARERI, Valerio, 70327 Stuttgart (DE)
(74) Representative: MFG Patentanwälte Meyer-Wildhagen Meggle-Freund Gerhard PartG mbB
(86) International application number: PCT/EP2020/068840
(87) International publication number: WO 2021/004944

(56) References cited:
- DE-A1-102017 129 626
- US-A1- 2016 003 937
- US-A1- 2019 129 034

## Description

### TECHNICAL FIELD

The present disclosure generally pertains to a time-of-flight sensing circuitry and a method for operating a time-of-flight sensing circuitry.

### TECHNICAL BACKGROUND

Generally, time-of-flight systems are known, which are able to determine a distance to a scene or to an object on the basis of a roundtrip delay of emitted light. The light is emitted by a light source of the time-of-flight system and a time-of-flight image sensor detects the light reflected from the scene.

Typically, the time-of-flight image sensor outputs the image information in the form of frames,
wherein the content of the frames may be adjusted by setting a configuration of the frames, e.g. by setting the time-of-flight image sensor in an associated operation mode.

A common architecture of time-of-flight systems has a host and the time-of-flight image sensor,
wherein the host and the time-of-flight image sensor communicate over a bus with each other, such as the I²C bus system or the like.

In such systems, the host may be configured to control the time-of-flight image sensor, for example, in order to set the time-of-flight image sensor in another operation mode or in order to configure the content of the frames which are output by the time-of-flight image sensor to the host for further processing.

However, typically, this requires intense data communication between the host and the time-of-flight image sensor.

Moreover, known ToF cameras or sensors use one type of illuminator and therefore the usability is limited, since only a certain range can be measured, a field of view is limited, sun light deteriorates the measurement or multipath errors may arise.

For example, patent application publication DE 10 2017 129 626 A1 describes a sensor system for three-dimensional capture of a scene with different photon accumulators.

A time-of-flight sensor devices which generates and analyzes a high-resolution depth map frame from a high-resolution image is known from patent application publication US 2016/0003937 A1. Moreover, patent application publication US 2019/0129034 A1 describes a range image generation apparatus.

Although there exist techniques for providing a time-of-flight sensor and a time-of-flight system, it is generally desirable to provide a time-of-flight sensing circuitry and a method for operating a time-of-flight sensing circuitry, which at least partially improve such known time-of-flight sensors and time-of-flight systems.

### SUMMARY

According to a first aspect, the invention provides a time-of-flight sensing circuitry in accordance with independent claim 1. According to a second aspect, the invention provides a method for operating a time-of-flight sensing circuitry in accordance with independent claim 10. Further aspects are set forth in the dependent claims, the drawings, and the following description.

### BRIEF DESCRIPTION OF THE DRAWINGS

Embodiments are explained by way of example with respect to the accompanying drawings, in which:
Fig. 1 depicts a block diagram of an embodiment of a sequencer;
Fig. 2 schematically illustrates an embodiment of a memory;
Fig. 3 shows an embodiment of a calibration sequence;
Fig. 4 shows a flow chart of an embodiment of a determination of a scenario;
Fig. 5 shows an embodiment of a decision of an imaging mode sequence;
Fig. 6 shows a further embodiment of a decision of an imaging mode sequence;
Fig. 7 shows an embodiment of a method, if a dark scenario is determined; and
Fig. 8 shows a method for operating the ToF sensing circuitry.

### DETAILED DESCRIPTION OF EMBODIMENTS

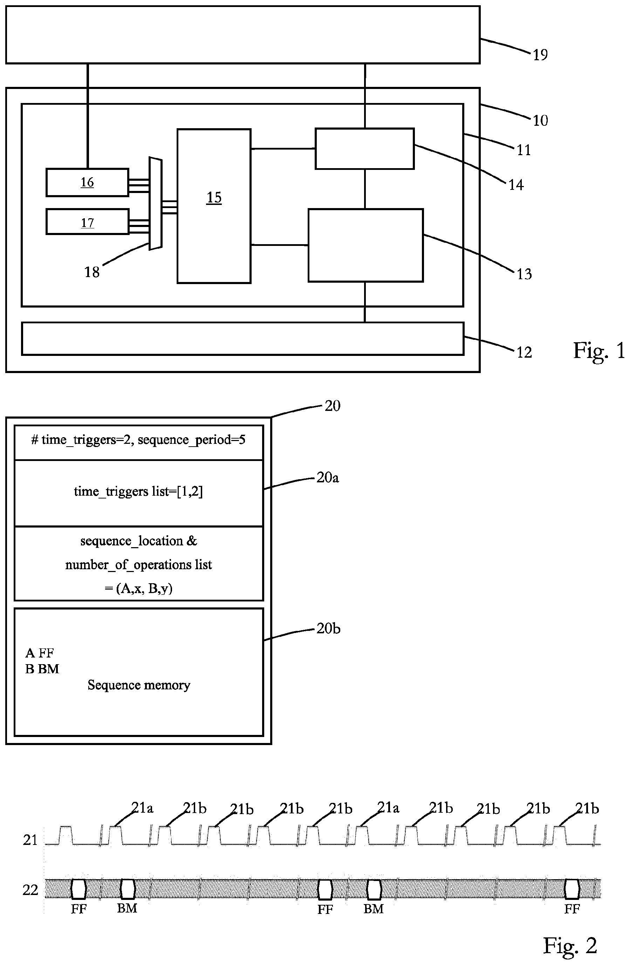

Before a detailed description of the embodiments under reference of Fig. 1, general explanations are made.

As explained in the outset, known ToF devices are limited in their usability, i.e. they may only be used under specific circumstances. It has been recognized that it is desirable in some embodiments to provide a flexible ToF device with an increased usability, e.g. with more than one illumination source to sense different scenarios or to select a suitable combination of illumination sources (e.g. individual or sequentially) for a specific scenario.

In order to combine different illumination sources, such as active infrared illumination sources including modulated (infrared) light for spot and full-field ToF and unmodulated (infrared) light for a flooded imaging mode (without the detection of distances or depths), it is also desirable in some embodiments to provide an apparatus or circuitry which is suitable for sensing signals in response to a switching between those two (or more) illumination modes.

It is, moreover, desirable in some embodiments to be able to react dynamically to changes in an environment. For example, if a ToF device is included in a moving vehicle, an external situation may change (e.g. light conditions, distance to other cars, etc.). Therefore, operational modes (or imaging modes) need to be changed on-the-fly without having the need (and the costs) to include several devices.

Therefore, some embodiments pertain to a time-of-flight sensing circuitry for sensing image information in different imaging modes, having: a light sensing circuitry for detecting light and outputting light sensing signals; and a logic circuitry for processing the light sensing signals from the light sensing circuitry, wherein the logic circuitry is configured to decide an imaging mode among the different imaging modes.

The ToF sensing circuitry may be a (one or more) ToF image sensor for imaging light from a scene, wherein the light stems, for example, from one or more (e.g. two) illumination sources, but the light can also stem from the sun, an environmental illumination, indoor illumination, etc.

Hence, the light sensing circuitry for detecting light and outputting light sensing signals may be based on known technologies for light detection and it may include pixels or photosensitive elements, which may be arranged in an array, or the like, and which may be based on known technologies, such as CMOS (complementary metal-oxide-semiconductor), CCD (charge coupled device), SPAD (single photon avalanche diode), CAPD (current assisted photonic demodulator), etc.

An imaging mode refers in some embodiments to the way of sensing image information. For example, an imaging mode may be the sensing of image information in every driven pixel of the ToF light sensing circuitry (to which is also referred to as full frame mode herein). Another imaging mode may be a binning (e.g. 2x2, 4x4, etc.) mode, wherein a subset or group of (neighboring) pixels are combined or integrated to one information, as it is generally known (to which is also referred to as binned frame mode herein).

Additionally, an imaging mode may refer to a spot ToF mode, in which only one pixel is driven (also an additional light sensing circuitry may be included, which only provides one pixel), refer to a full field mode, in which every pixel is driven, or refer to a mosaicked mode, wherein a predetermined subset or pattern of pixels of the light sensing circuitry is driven at a time, such as every second pixel, only pixels with specific phase information (in the case of indirect ToF), only red pixels (in the case of a hybrid ToF sensor), only a quarter of the pixels, or the like.

In some embodiments it can be distinguished between direct ToF (dToF) and indirect ToF (iToF) for measuring a distance either by measuring the run-time of emitted and reflected light (dToF) or by measuring one or more phase-shifts of emitted and reflected light (iToF), without limiting the present disclosure in that regard.

Moreover, another imaging mode may be the sensing of two-dimensional (2D), three-dimensional (3D), color, infrared information, or the like. Also, a mixture of different imaging modes may be provided, such as 3D and infrared information, or the like.

The light sensing circuitry outputs the light sensing signals, which may be analog and/or digital signals, to the logic circuitry. The light sensing circuitry may include analog-to-digital converters, logic circuits, etc., for generating the light sensing signals.

The logic circuitry for processing the light sensing signals from the light sensing circuitry is configured to decide an imaging mode among the different imaging modes.

For example, the logic circuitry may decide the binned frame mode after a predetermined amount of frames, in which the ToF sensing circuitry was driven in the full frame mode. After another predetermined amount of frames of driving the ToF sensing circuitry in the binned frame mode, the logic circuitry may decide the full frame mode again, or another imaging mode, e.g. a 2D infrared mode.

The decision may be based on different (external, environmental, and the like) factors, such as ambient light conditions, weather, speed (if used in a vehicle, or the like), availability of sensors, or the like.

For example, if the decision is only based on ambient light conditions, and there is ambient light deriving from the sun, this may result in a high generation of noise in a time-of-flight system. Therefore, for example, a ToF measurement in an active infrared mode (i.e. a mode in which unmodulated infrared light is measured) would have a low significance, since it could not be distinguished between light stemming from the sun (ambient light) and light emitted by the ToF system.

Thus, the logic circuitry may decide for another imaging mode than the active IR mode, e.g. a spot ToF mode, in which modulated light is measured.

Also any other imaging mode may be decided. For example, in a first frame a spot ToF mode is decided, in a second frame an infrared mode is decided and in a third frame a full-field ToF mode is decided. Furthermore, in such embodiments, the three frames may be repeated for six times, i.e. after the third frame, the spot ToF is set again.

In some embodiments, the decision is based on a first imaging mode being a calibration mode.

For example, in the calibration mode (also referred to as dark mode or dark frame herein), there may be no detection of light stemming from a light source included in a ToF system, or the like, i.e. only ambient light may be detected and light sensing signals may only be generated in response to ambient light (e.g. common mode, total signal, average signal, or the like) (also referred to as a passive driving of the ToF sensing circuitry).

The calibration may be repeated regularly at a predefined frequency, a random frequency, or the like, or arbitrarily.

Also other parameters may be detected in the calibration mode, e.g. temperature, humidity, air pressure, and the like.

In some embodiments, the calibration mode includes a detection of noise. The noise may be generated by the ambient light and may therefore be an indicator of the ambient light conditions, or the like. However, as discussed, also other noise sources may be considered.

In some embodiments, the decision is based on a predetermined level of the detected noise. For example, if the noise is above a predetermined level (or threshold), ambient light may be of such an intensity that, e.g. a passive IR measurement (as discussed), may not be sensible. Therefore, the logic circuitry may decide for another imaging mode than the passive IR mode.

However, if the noise is below the predetermined level (note that also a plurality of predetermined levels may exist all indicating different or partially same imaging modes), it may be decided for the passive IR mode.

In some embodiments, the logic circuitry is further configured to decide an imaging mode sequence.

The imaging mode sequence may include different (consecutive) imaging modes which are decided by the logic circuitry. For example, in a light scenario (high ambient light), an alternating of a full-field time of flight mode (every pixel of a ToF image sensor is read out) and a spot ToF mode may be decided for a predetermined amount of frames before a dark frame triggers a new decision (which may be the same decision as before).

The full-field mode may refer to a "standard" ToF mode with modulated light and the whole field of view of the ToF device is imaged. The measurable range (distance) in the full-field mode may be limited by the needed power of a corresponding illumination source. In the full-field mode a 3D depth frame image may be generated and/or a 2D intensity image.

The spot ToF mode may refer to a driving of a subset (or only one) of sensor elements (e.g. pixels), thereby creating a dot pattern. Therefore, the power of the modulated light source (e.g. laser) may be concentrated on the requirements of the subset of the sensor elements and therefore a higher range may be measurable due to an increased power density.

Active/passive infrared (IR) may refer to the sensing and measuring of IR components of unmodulated light. Passive IR may refer to the measurement of ambient light and active IR may refer to an emitting and consecutive measuring of IR light, both in order to obtain a 2D intensity image.

The 2D intensity image is, in some embodiments, used for smart edge-preserving interpolation of the (sparse) spot-ToF depth map (i.e. a guided filter) and/or for an object recognition, e.g. with an artificial intelligence.

However, the imaging mode sequence is not limited to be a periodic sequence as in the embodiment described above. It may include at least one of a predetermined sequence, a random sequence, or a periodic sequence. Furthermore, a random sequence for a predetermined amount of frames may be followed by a periodic sequence for a predetermined amount of frames. In this context, the sequence may be predetermined. There may also be other predetermined sequences, such as a sequence stored in a table, a (pre-)programmed sequence, or the like. The random sequence may also include a pseudo random sequence.

Hence, in some embodiments, the imaging mode sequence may include the definition of how the sequence is generated (e.g. randomly or pseudo randomly, predetermined), but not necessarily the definition of the exact point of time when an imaging mode among the different imaging modes is set, while in other embodiments the sequence may define the points of time and/or the order, number or other parameters of the setting of the imaging mode among the different imaging modes.

In some embodiments, the imaging mode sequence includes at least one of a predetermined sequence, a random sequence and a periodic sequence of the different imaging modes, as discussed.

In some embodiments, the different imaging modes include a spot time-of-flight mode, a full frame mode, a binned frame mode, an infrared mode, a two-dimensional mode, a full field mode, and a mosaicked mode, as already discussed above.

In some embodiments, in which the ToF sensing circuitry includes an indirect ToF (iToF) sensor, an RoI mode (region of interest), binning and sub-sampling modes (e.g. only taking a sub-set of pixels) may be employed. Thus, the ToF sensing circuitry may be adapted for a field-of-view mode, high-speed applications, low-speed applications, sub-sampled scene, or the like.

In some embodiments, the decision further includes a determination of an imaging scenario. The imaging scenario may depend on an external condition, such as temperature or ambient light being above or below a predetermined threshold.

Depending on the condition (or at least one of the conditions), an imaging scenario may be determined, which may be a "hot scenario", which may trigger a specific imaging mode or imaging mode sequence.

In some embodiments, the imaging scenario includes at least one of a light scenario and a dark scenario. For example, if ambient light is above/below a predetermined threshold, a light/dark scenario may be determined, which may then trigger a specific imaging mode or a specific imaging mode sequence, e.g. alternating of full-field ToF and spot-ToF.

In some embodiments, the logic circuitry includes a sequencer circuitry and a register circuitry, wherein the register circuitry includes multiple registers for storing data which are derived on the basis of the light sensing signals and wherein each imaging mode of the different imaging modes is based on a predetermined set of registers, and wherein the sequencer circuitry is adapted to dynamically select a set of registers for setting the imaging mode among the different imaging modes in response to the decision.

For example, the logic circuitry may set the binned frame mode after a predetermined amount of frames, in which the ToF sensing circuitry was driven in the full frame mode. After another predetermined amount of frames of driving the ToF sensing circuitry in the binned frame mode, the logic circuitry may set the full frame mode again, or another imaging mode, e.g. a 2D infrared mode.

To achieve this, the corresponding set of registers have to be selected for the setting of the described (or any other) imaging modes.

In this context, the selecting is a dynamical selecting, in some embodiments.

Also any other imaging set of registers may be dynamically selected. For example, in a first frame a spot ToF mode is set (and a corresponding set of registers are selected), in a second frame an infrared mode is set (and a corresponding set of registers are selected) and in a third frame a full-field ToF mode is set (and a corresponding set of registers are selected.

The sequencer circuitry and the register circuitry are (directly or indirectly) connected with each other or coupled to each other (e.g. over other circuits, units, etc.).

The register circuitry has multiple registers for storing data, wherein the data are derived on the basis of the light sensing signals. The data may be included in the light sensing signals from the light sensing circuitry or they may be derived by the logic circuitry on the basis of the received light sensing signals (or a mixture of both, i.e. partially included in the light sensing signals and partially derived on the basis of the light sensing signals). The data may be indicative for different types of information, such that also the registers include different types of information. The different types of information may be for example, without limiting the present disclosure in that regard, phase information, depth information, color information, or the like, such information for all pixels (light sensing elements) or group of pixels (light sensing elements) or the like of the light sensing circuitry, etc.

The sequencer circuitry may be configured as a unit, logic chip or processor, or the like, it may include further sub-units, memory (memories), etc.

The sequencer circuitry is adapted to dynamically select a set of registers for setting the imaging mode among the different imaging modes.

Depending on the imaging mode, the registers may be different or identical. For example, if a first imaging mode is a spot ToF imaging mode and a second imaging mode is a full field ToF imaging mode, the set of registers may be identical for the first and second imaging mode. they may have partially the same registers or may have completely different registers. Moreover, the number of selected registers in the first and second sets may be equal or different.

On the basis of the selected set, an associated imaging mode can be dynamically provided, e.g. generated. As the sequencer circuitry is in the logic circuitry of the ToF sensing circuitry, the sequencer circuitry may switch between the set of registers for a first and a second imaging mode (or more). Moreover, the sequencer circuitry may be programmed such that first, second and more different imaging modes can be set by setting the registers accordingly without having the need, for example, to switch the ToF sensor in different operating modes. Moreover, as the logic circuitry with the sequencer circuitry sets the first and second sets of registers, there is no additional interaction between a host and the ToF sensor necessary, except for, for example, an initial (or intermediate, dynamic, etc.) programming of the logic circuitry or sequencer circuitry or re-programming, or the like.

The registers can be programmed using an I²C interface, SPI interface, or the like. The sequencer can be multiplexed with these interfaces and may be a state-machine, a micro-controller, or the like.

In some embodiments the sequencer circuitry includes a memory for storing sequence configurations, the sequence configurations determining the set of registers and the defined sequence for the generation of the imaging mode sequence.

In general, the memory may be any type of memory, a random-access memory, a non-volatile memory, a storage, etc. The sequence configurations may be in the form of data (bits, data words, file, programming language, etc.) and may be transferred, for example, to the ToF sensor and stored in the memory of the sequencer circuitry. The sequence configurations may include instructions, control data or other information which is used by the sequencer circuitry for determining the sets of registers and for determining the imaging mode sequence, e.g. whether the defined sequence is random, pseudorandom, predetermined (e.g. based on a pattern, regularly, one frame, etc.), etc. Thereby, the sequencer circuitry can be easily programmed by just transferring the sequence configurations in its memory.

In some embodiments, the sequence configurations are divided in a first part and in a second part, wherein the first part defines at least one of: number of imaging modes, location of frames in the imaging mode sequence, trigger for first and second imaging mode, and wherein the second part defines the first and second sets of registers. The first part may be stored in a first part of the memory and the second part may be stored in a second part of the memory. The first part and second part may be different memory locations in a common memory space or the first part and the second part of the memory may also have different functions and/or may be even structurally separated from each other. For instance, the first part may be for the basic configuration of the sequencer circuitry, e.g. the number of imaging modes, location of frames in the imaging mode sequence, trigger for first and second imaging mode, or the like, wherein the second part includes the sets of registers which are used for generating the associated frames. Hence, during generation of frames, the basic frame structure may be defined by the content in the first part of the memory, while the content of the frames may be defined by the content in the second part of the memory, such that only the second part of the memory may be read out during frame generation.

In some embodiments, the sequencer circuitry is programmable, as also indicated above, e.g. by transmitting the respective sequence configurations to it or by defining the sets of registers, and the imaging mode sequence and transmitting corresponding information to the sequencer circuitry or by storing such information such that the sequencer circuitry can access it.

In some embodiments, the ToF sensor further has a multiplexer and a bus-interface, wherein the bus-interface and the sequencer circuitry are connected via the multiplexer to the register circuitry. The multiplexer may perform time-multiplexing between the sequencer circuitry and the bus-interface. Thereby, a host or other entity can access the register circuitry over the bus-interface while the sequencer circuitry can also access the register. The bus-interface may be, for example, configured for communication over I²C bus, MIPI bus, SPI bus, or other bus-systems.

In some embodiments, the ToF sensor further has a controller configured to generate the defined imaging mode sequence on the basis of the selected sets of registers. For instance, the controller reads out the data from the register, on the basis of a predetermined frame rate. As the sequencer circuitry sets the register circuitry in accordance with the first and second sets of registers, the controller will automatically receive and generate the different imaging modes in the order of the defined sequence. The controller may have a processor, logic circuits, memory, etc.

In some embodiments, the sequencer circuitry sets the register circuitry according to the selected sets of registers, such that the register outputs the different imaging modes, e.g. according to the imaging mode sequence. As discussed, the sequencer circuitry may also set the register circuitry in accordance with the sequence configurations discussed above.

In some embodiments, a first imaging mode is configured for providing time-of-flight data and the second imaging mode is configured for providing enhanced sensor data, thereby, for example, a time-of-flight measurement can be performed, wherein simultaneously enhanced sensor data may be received in the second imaging mode, e.g. for improving the time-of-flight measurement, for detecting an interfering other time-of-flight system, for getting diagnostic data from the sensor, etc.

In some embodiments, an imaging mode (sequence) is decided, wherein the first imaging mode includes a first time-of-flight imaging mode for acquiring distance information and the second imaging mode includes an infrared imaging mode for acquiring object information (e.g. an infrared imaging mode).

Object information may in this context refer to the capturing or the recognition of an object in a field-of-view of the ToF sensing circuitry. The recognition of the object may be performed with object recognition circuitry coupled or included in the ToF sensing circuitry.

Hence, in some embodiments, an object recognition is performed with object recognition circuitry coupled to or included in the ToF sensing circuitry.

The object recognition circuitry may be an artificial intelligence, such as a neural network, or the like, applying machine learning algorithms, such as supervised learning, semi-supervised learning, unsu-pervised learning, reinforcement learning, feature learning, sparse dictionary learning, anomaly detection learning, decision tree learning, association rule learning, or the like.

The machine learning algorithm may further be based on at least one of the following: Feature extraction techniques, classifier techniques or deep-learning techniques. Feature extraction may be based on at least one of Scale Invariant Feature Transfer (SIFT), Cray Level Co-occurrence Matrix (GLCM), Gaboo Features, Tubeness or the like. Classifiers may be based on at least one of Random Forest; Support Vector Machine; Neural Net, Bayes Net or the like. Deep learning may be based on at least one of Autoencoders, Generative Adversarial Network, Weakly Supervised Learning, Boot-Strapping or the like. In some embodiments, the algorithm may be hardcoded on the analysis portion, i.e. the machine learning algorithm may provide an image processing algorithm, a function, or the like, which is then provided at a chip, such as a GPU, FPGA, CPU, or the like, which may save processing capacity instead of storing an artificial intelligence on (parts of) the ToF sensing circuitry.

However, in other embodiments, the machine learning algorithm may be developed and/or used by an (strong or weak) artificial intelligence (such as a neural network, a support vector machine, a Bayesian network, a genetic algorithm, or the like) which constructs the first imaging data, which, in some embodiments, makes it possible that the algorithm may be adapted to a situation, a scene, or the like.

In some embodiments, the algorithm may be hardcoded on (parts of) the ToF sensing circuitry, i.e. the machine learning algorithm may provide an image processing algorithm, a function, or the like, which is then provided at a chip, such as a GPU, FPGA, CPU, or the like, which may save processing capacity instead of storing an artificial intelligence on (parts of) the ToF sensing circuitry.

However, in other embodiments, the machine learning algorithm may be developed and/or used by an (strong or weak) artificial intelligence (such as a neural network, a support vector machine, a Bayesian network, a genetic algorithm, or the like) which constructs the first imaging data, which, in some embodiments, makes it possible that the algorithm may be adapted to a situation, a scene, or the like.

Moreover, in some embodiments, the object recognition may be performed in a car environment (or automotive environment, in general).

The car may provide enough space to provide different light sensing circuitries, such as a spot ToF image sensor, an infrared sensor, a ToF image sensor with a plurality of pixels (in contrast to the spot sensor), a color image sensor, or the like, which may all be included in the ToF sensing circuitry.

Other environments than the car environment may provide a larger amount of light sensing circuitries or a smaller amount of light sensing circuitries. For example, a handheld camera device may provide a spot ToF image sensor and a ToF image sensor with a plurality of pixels.

As discussed, all these light sensing circuities (e.g. image sensors) may be included in one light sensing circuitry (e.g. one programmable image sensor).

Some embodiments pertain to a method for operating a time-of-flight sensing circuitry for sensing image information in different imaging modes, wherein the time-of-flight sensing circuitry includes a light sensing circuitry for detecting light and outputting light sensing signals and a logic circuitry for processing the light sensing signals from the light sensing circuitry, the method comprising: deciding an imaging mode among the different imaging modes, as described herein.

The method may be performed by a processor, controller or the like and it may be performed by a ToF device including the time-of-flight sensing circuitry discussed herein.

In some embodiments, the decision is based on a first imaging mode being a calibration mode, as discussed herein. In some embodiments the calibration mode includes a detection of noise, as discussed herein. In some embodiments, the decision is based on a predetermined level of the detected noise, as discussed herein. In some embodiments, the method further includes deciding an imaging mode sequence, as discussed herein. In some embodiments, the imaging mode sequence includes at least one of a predetermined sequence, a random sequence and a periodic sequence of the different imaging modes, as discussed herein. In some embodiments, the different imaging modes include a spot time-of-flight mode, a full frame mode, a binned frame mode, an infrared mode, a two-dimensional mode, a full field mode, and a mosaicked mode. In some embodiments, the decision further includes a determination of an imaging scenario, as discussed herein. In some embodiments, the imaging scenario includes at least one of a light scenario and a dark scenario, as discussed herein. In some embodiments, the logic circuitry includes a sequencer circuitry and a register circuitry, wherein the register circuitry includes multiple registers for storing data which are derived on the basis of the light sensing signals and wherein each imaging mode of the different imaging modes is based on a predetermined set of registers, and the method further includes: dynamically selecting a set of registers for setting the imaging mode among the different imaging modes in response to the decision, as discussed herein.

The methods as described herein are also implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed.

Returning to Fig. 1, there is depicted an embodiment of an implementation of a sequencer 17 in a ToF sensing circuitry 10 according to the present disclosure in a block diagram.

The ToF sensor 10 has logic circuitry 11 and a light sensing circuitry 12 including an array of light detection pixels, analog-to-digital conversion, etc., such that the light sensing circuitry 12 outputs light sensing signals to the logic circuitry 11 in response to detected light.

The log circuitry 11 has a processor/control unit 13, a data interface 14, a register circuitry 15, a bus controller 16 (which is a I²C slave controller), a sequencer circuitry 17 and a multiplexer 18.

The control unit 13 is connected to the light sensing circuitry 12 and receives the light sensing signals from it, which are digitized by analog-to-digital conversion performed by the light sensing circuitry 12, and passes the digitized light sensing signals to the register circuitry 15, to which it is connected, for intermediate storage.

The control unit 13 is also connected to the data interface 14, which, in turn, is connected to a processing unit of a host circuitry 19, such that the processing unit of the host circuitry 19 and the control unit 13 of the ToF sensing circuitry 10 can communicate over the data interface 14 with each other.

On the other hand, the bus controller 16 is connected over an I²C bus with a configuration unit of the host circuitry 19, and it is connected to the register circuitry 15 and to the sequencer circuitry 17 over the multiplexer 18.

Hence, the configuration unit of the host circuitry 19 can transmit control or configuration data/commands over the I²C bus and the bus controller 16 to the sequencer circuitry 17 for controlling and/or configuring the sequencer circuitry 17. For instance, the configuration unit can also transmit imaging sequence configurations as discussed herein to the sequencer circuitry 17.

The control unit 13 is configured to generate data frames, as will also be discussed further below, on the basis of the settings of the registers of the register circuitry 15, which in turn is set by the sequencer circuitry 17, e.g. based on sequence configurations received from the configuration unit of the host circuitry 19.

In this embodiment, the ToF sensing circuitry is real-time configurable, since the sequencer circuitry 17 is able to change the type of frame from one frame to another by changing the associated register setting, such that, for example, during operation different imaging modes can be dynamically set.

Fig. 2 schematically illustrates an embodiment of a memory 20 of the sequencer circuitry 17 for storing imaging sequence configurations, which may be received from the configuration unit of the host circuitry 19 and which configure the sequencer circuitry 17 and its states (such that the sequencer circuitry 17 may also be considered as a state machine).

In this embodiment, the entries in the memory are a result of the decision of the logic circuitry.

The memory 20 has a first part 20a and a second part 20b, wherein a first part of sequence configurations is stored in the first part 20a and a second part of sequence configuration is stored in the second part 20b. The memory 20 is a SRAM (static random access memory) in this embodiment, and the first part 20a and the second part 20b are logically separated from each other.

The first part of sequence configurations includes, for example: number of types of frames, location of frames in the sequence of frames, trigger for first, second, etc. type of frames, etc.

In the first part 20a, three data fields are illustrated, wherein the upper data field stores a number of triggers (e.g. time, "# time_triggers") and the period of a sequence ("sequence_period"), such that, for example, it is defined how often a specific frame is repeated.

In a second data field, in the middle, a list of the triggers is stored ("time_triggers list"), which indicates when and where in a sequence a specific frame type will be applied.

In a third data field, at the bottom, for instance, a sequence location is stored, i.e. a location ("sequence_location") and a length of the sequence ("number_of_operations list") in the second (sequence memory) part 20b are stored.

The second part of sequence configurations includes, for example, (first, second, etc.) sets of registers on the basis of which the frames are generated by the control unit 13.

In this embodiment, the number of triggers is two ("# time_triggers=2") and the period of the imaging sequence is five ("seq_p=5"), the entries in the time trigger list are [1,2], and the locations of the sequences in the memory part 20b are "A" with a length "x", and "B" with a length "y", which is illustrated also as memory entries in the memory part 20a.

In the memory part 20b, the associated sequences defining the sets of registers for sequence "FF" corresponding to a full frame sequence and "BM" corresponding to a binned frame (having a lower resolution) are stored at the memory locations A and B, respectively, wherein the first sequence "FF" has a set of registers for one FF frame (e.g. second imaging mode) and the second sequence "BM" has a second set of registers such that four binned frames (e.g. first imaging mode) are generated, wherein the ToF sensing circuitry 1 is also switched between a full frame mode and a binned frame mode for providing accordingly the light sensing signal and data.

Hence, in this embodiment, a bandwidth limitation due to a higher pixel count is overcome by applying a hybrid mode, wherein the operation switches between different modes, which combine benefits on execution time and quality, wherein in the present embodiment between the binning mode BM and the full resolution mode FF is switched, wherein, as mentioned, in the BM mode four frames are generated.

This means, assuming that the FF mode has a first set of registers Set_1 for generating the FF frame and the BM mode as a second set of registers Set_2 for generating the BM frames, a timing is as follows:
[switch full resolution mode] Set_1, [switch to binned mode], Set_2, Set_2, ... , Set_2, [repeat]

In other words, the number of four BM frames is generated by repeating the associated set of registers accordingly in the associated sequence.

In the present embodiment, without limiting the present disclosure in that regard, the full resolution mode FF is used at a frame rate of 5 fps (frames per second) and the binned mode at a frame rate of 30 fps.

Hence, in some embodiments, the frame rate for the first and second imaging modes may be different.

In the lower part of Fig. 2, an internal trigger sequence 21 is shown, wherein each peak 21a triggers setting Set_1 and, thus, generation of FF frames, and each peak 21b switches to the setting Set_2 and the generation of BM frames.

At 22, a control command structure is illustrated, wherein a first command "FF" causes the trigger peak 21a and the second command "BM" causes the trigger peaks 21b, such that one FF frame is generated and consecutively four BM frames.

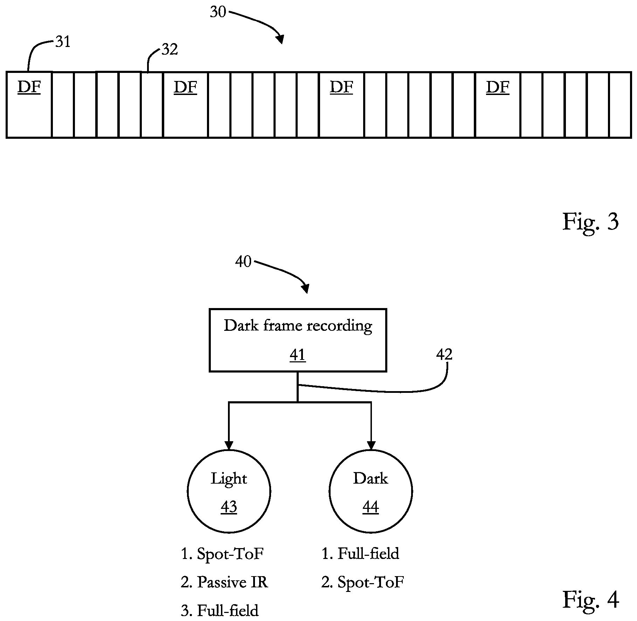

Fig. 3 shows an embodiment of a calibration sequence 30 according to the present disclosure. The calibration sequence 30 starts with a dark frame (DF) 31, in which ambient light is measured to detect a level of noise. The DF 31 is followed by an imaging mode sequence 32 (in this embodiment five frames) for which is decided based on the detected level of noise in the DF 31.

After that, this cycle of a DF 31 and an imaging mode sequence 32 (which may be different) is repeated.

As discussed, in some embodiments, a scenario is determined. Fig. 4 shows a flow chart 40 of embodiment of a determination of the scenario.

In 41, a DF is recorded, as discussed herein.

Based on the DF, a scenario is decided in 42.

If a light scenario is determined (as in 43), an imaging mode sequence is decided, as depicted, beginning with a spot-ToF mode in a first frame, a passive IR mode in a second frame and a full-field ToF mode in third frame.

If a dark scenario is determined (as in 44), an imaging mode sequence is decided beginning with a full-field ToF mode and then a spot ToF mode.

In some embodiments, the dark frame is recorded again without a repetition of the imaging mode sequence. In other embodiments, the decided imaging mode sequence is repeated a predetermined amount of times. In this embodiment, the method stops after one imaging mode sequence and.

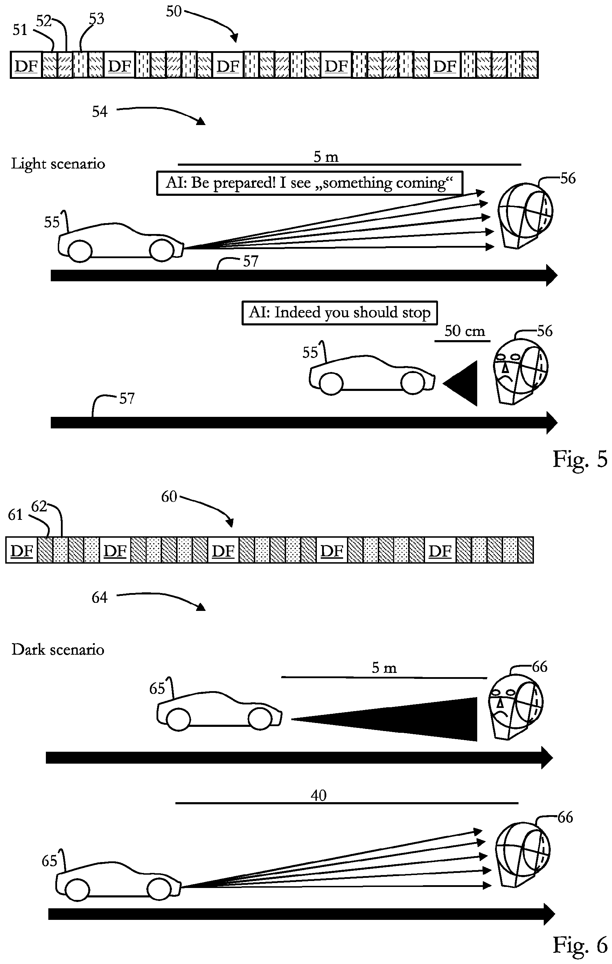

Fig. 5 shows a further embodiment of the decision of an imaging mode sequence 50, if a light scenario is determined (upper part) and a situation 54 in which the imaging mode sequence 50 is applied (lower part).

The imaging mode sequence 50 starts with a dark frame DF. Then follows a sequence of a first frame 51 in a spot ToF mode (first imaging mode), a second frame 52 in a passive IR imaging mode (second imaging mode) and a third frame 53 in a full field ToF imaging mode (third imaging mode), wherein the different frames are represented with different hatchings. Then follows a sequence of the dark frame DF, the third frame 53, the first frame 51, the second frame 52, the third frame 53 and a third frame 52. This sequence is repeated four times.

The imaging mode sequence 50 is applied in a car environment depicted in the lower part of Fig. 5.

The situation 54 shows a car 55 having a ToF sensing circuitry according to the present disclosure (not depicted). The ToF sensing circuitry is configured to decide the three different imaging modes 51 to 53 according to the imaging mode sequence 50.

In the first scene 54, it is recognized with the spot ToF mode that the car 55 is five meters away from an object 56. To save processing power for objects which are above a threshold distance (in this embodiment roughly 50 cm), only information of the spot ToF mode and the passive IR mode are transmitted to a computer included in the car 55, which stores an artificial intelligence (Al).

The AI performs an object recognition and recognizes an obstacle in the driving direction of the car 55. The AI transmits the message: "Be prepared! I see "something coming" " to warn the driver of the obstacle. Below the threshold distance, information of the full field ToF mode is adopted and the AI recognizes the object 56 to be a person. The AI transmits the message "Indeed you should stop".

In other embodiments, the AI is configured to stop the car itself.

Fig. 6 shows a further embodiment of the decision of an imaging mode sequence 60, if a dark scenario is determined (upper part) and a situation 64 in which the imaging mode sequence 60 is applied (lower part).

The imaging mode sequence 60 starts with a dark frame DF.

Then follows a sequence of a first frame 61 in a full-field ToF mode (first imaging mode), a second frame 62 in a spot-ToF mode (second imaging mode). wherein the different imaging modes are represented with different hatchings. Then follows a sequence of the dark frame DF, the first frame 61, the second frame 62, the first frame 61, the second frame 62 and the first frame 61. This sequence is repeated four times.

As illustrated in the lower part of Fig. 6, in the situation 64, the first imaging mode is utilized to detect shorter distances (e.g. 5 m) than the second imaging mode (e.g. 40 m).

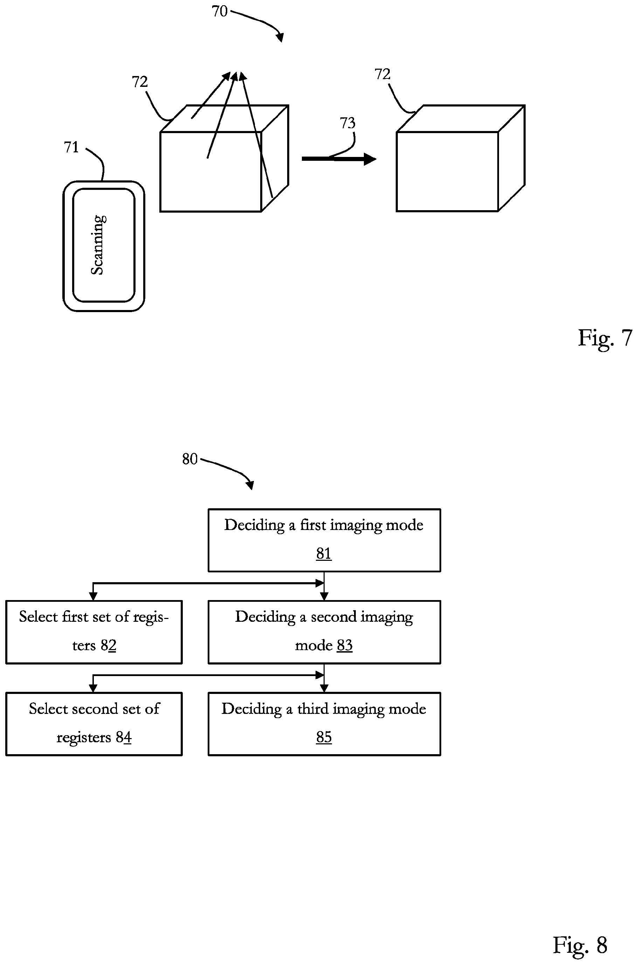

Fig. 7 shows a further embodiment of a method 70, if a dark scenario is determined. The method 70 illustrates a multipath correction using spot-ToF and foil-field.

In the embodiment of Fig. 7, a ToF apparatus including the ToF sensing circuitry according to the present disclosure is included in a mobile phone 71. The mobile phone 71 performs a ToF measurement (indicated by "Scanning") on a box 72.

Therefore, after a determination of a dark scenario, a first frame is decided to be in a full-field imaging mode, wherein multipath interferences arise, since the box 72 is a three-dimensional object, which causes run-time differences of emitted light of the ToF apparatus.

Therefore, a second frame is decided to be in a spot-ToF imaging mode to correct the multipath interferences in 73.

The following table illustrates an embodiment of a table which is a basis for the decision of the logic circuitry, wherein in the present disclosure it is not limited that the decision is based on a table.

| | Full-field Range | Spot-Tof Range | Passive IR | Active IR |
|---|---|---|---|---|
| Sun light: | 0.7 m | 4.3 m | Working | Not working |
| Int. Time 100e-6 | | | | |
| Dark: | 7.3 m | 42.1 m | Not Working | Working |
| Int. Time 500e-6 | | | | |
| Resolution | Full/3D | Sparse/3D | Full/2D | Full/2D |

The first (left) column includes two determined scenarios (sun light and dark) and a resolution of a corresponding imaging mode (first (upper) row). Moreover, a specification Int. Time 100e-6 (internal signal detection time in a dark frame) gives a requirement on the determination of the sun light scenario and the specification Int. Time 500e-6 gives a requirement of the determination of the dark scenario.

In the sun light (dark) scenario, the maximum range in the full-field ToF mode is 0.7 m (7.3 m), in the spot ToF mode it is 4.3 m (42.1 m). Moreover, in the sun light (dark) scenario, the passive IR mode is working (not working), wherein the active IR mode is not working (working).

As discussed, also an AI may decide, or other parameters may be utilized for the decision instead of the (or other) table(s).

Hence, the logic circuitry may decide the imaging mode depending on requirements of the user or an environment, or the like, and, as discussed, on the determined scenario. For example, even if the dark scenario is determined, the passive IR mode may be decided (even if determined to be not suitable or not working), if e.g. a surrounding temperature, or the like, is above a predetermined threshold value.

For example, even if a sun light scenario is determined, the spot-ToF mode might not be decided, because, in a car environment, nobody else is on a street, or the like, and thus there is no need to measure a distance to another car.

Fig. 8 shows a method 80 for operating a ToF sensing circuitry according to the present disclosure in a flow chart.

In 81, a first imaging mode is decided, as described herein.

Therefore, in 82, a first set of registers is selected for the first imaging mode.

In 83, a second imaging mode is decided.

In 84, a second set of registers is selected for the second imaging mode.

In 85, a third imaging mode is decided (and in response a third set of registers is selected).

In other embodiments, this method is repeated a predetermined amount of times, as it is described herein.

It should be recognized that the embodiments describe methods with an exemplary ordering of method steps. The specific ordering of method steps is however given for illustrative purposes only and should not be construed as binding. For example the ordering of 81 and 82 in the embodiment of Fig. 8 may be exchanged. Also, the ordering of 83, 84 and 85 in the embodiment of Fig. 8 may be exchanged. Further, also the ordering of 21a and 21b in the embodiment of Fig. 2 may be exchanged. Other changes of the ordering of method steps may be apparent to the skilled person.

Please note that the division of the control 10 into units 11 to 18 is only made for illustration purposes and that the present disclosure is not limited to any specific division of functions in specific units. For instance, the control 10 could be implemented by a respective programmed processor, field programmable gate array (FPGA) and the like.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

## Claims

1. A time-of-flight sensing circuitry for sensing image information in different imaging modes, comprising:
a light sensing circuitry (12) for detecting light and outputting light sensing signals; and
a logic circuitry (11) for processing the light sensing signals from the light sensing circuitry (12), wherein the logic circuitry (11) is configured to decide an imaging mode among the different imaging modes, wherein the logic circuitry (11) includes a sequencer circuitry (17) and a register circuitry (15), wherein the register circuitry (15) includes multiple registers for storing data which are derived on the basis of the light sensing signals and wherein each imaging mode of the different imaging modes is based on a predetermined set of registers, and wherein the sequencer circuitry (17) is adapted to dynamically select a set of registers for setting the imaging mode among the different imaging modes in response to the decision.

2. The time-of-flight sensing circuitry according to claim 1, wherein the decision is based on a first imaging mode being a calibration mode.

3. The time-of-flight sensing circuitry according to claim 2, wherein the calibration mode includes a detection of noise.

4. The time-of-flight sensing circuitry according to claim 3, wherein the decision is based on a predetermined level of the detected noise.

5. The time-of-flight sensing circuitry according to anyone of claims 1 to 4, wherein the logic circuitry (11) is further configured to decide an imaging mode sequence.

6. The time-of-flight sensing circuitry according to claim 5, wherein the imaging mode sequence includes at least one of a predetermined sequence, a random sequence and a periodic sequence of the different imaging modes.

7. The time-of-flight sensing circuitry according to anyone of claims 1 to 6, wherein the different imaging modes include a spot time-of-flight mode, a full frame mode, a binned frame mode, an infrared mode, a two-dimensional mode, a full field mode, and a mosaicked mode.

8. The time-of-flight sensing circuitry according to anyone of claims 1 to 7, wherein the decision further includes a determination of an imaging scenario.

9. The time-of-flight sensing circuitry according to claim 8, wherein the imaging scenario includes at least one of a light scenario and a dark scenario.

10. A method for operating a time-of-flight sensing circuitry (1) for sensing image information in different imaging modes, wherein the time-of-flight sensing circuitry (1) includes a light sensing circuitry (12) for detecting light and outputting light sensing signals and a logic circuitry (11) for processing the light sensing signals from the light sensing circuitry (12), the method comprising:
deciding an imaging mode among the different imaging modes, wherein
the logic circuitry (11) includes a sequencer circuitry (17) and a register circuitry (15), wherein the register circuitry (15) includes multiple registers for storing data which are derived on the basis of the light sensing signals and wherein each imaging mode of the different imaging modes is based on a predetermined set of registers, the method further comprising:
dynamically selecting, by the sequencer circuitry (17), a set of registers for setting the imaging mode among the different imaging modes in response to the decision.

11. The method according to claim 10, wherein the decision is based on a first imaging mode being a calibration mode, in particular
wherein the calibration mode includes a detection of noise, in particular
wherein the decision is based on a predetermined level of the detected noise.

12. The method according to claim 10 or 11, further comprising deciding an imaging mode sequence, in particular
wherein the imaging mode sequence includes at least one of a predetermined sequence, a random sequence and a periodic sequence of the different imaging modes.

13. The method according to anyone of claims 10 to 12, wherein the different imaging modes include a spot time-of-flight mode, a full frame mode, a binned frame mode, an infrared mode, a two-dimensional mode, a full field mode, and a mosaicked mode.

14. The method according to anyone of claims 10 to 13, wherein the decision further includes a determination of an imaging scenario.

15. The method according to claim 14, wherein the imaging scenario includes at least one of a light scenario and a dark scenario.

## Patentansprüche

1. Laufzeiterfassungsschaltung zum Erfassen von Bildinformationen in verschiedenen Bildgebungsmodi, umfassend:
eine Lichterfassungsschaltung (12) zum Erfassen von Licht und Ausgeben von Lichterfassungssignalen; und
eine Logikschaltung (11) zum Verarbeiten der Lichterfassungssignale von der Lichterfassungsschaltung (12), wobei die Logikschaltung (11) konfiguriert ist, um einen Bildgebungsmodus unter den verschiedenen Bildgebungsmodi zu entscheiden, wobei die Logikschaltung (11) eine Sequenzerschaltung (17) und eine Registerschaltung (15) einschließt, wobei die Registerschaltung (15) mehrere Register zum Speichern von Daten, die auf der Basis der Lichterfassungssignale abgeleitet werden, einschließt und wobei jeder Bildgebungsmodus der verschiedenen Bildgebungsmodi auf einem zuvor bestimmten Satz von Registern basiert und wobei die Sequenzerschaltung (17) angepasst ist, um einen Satz von Registern zum Einstellen des Bildgebungsmodus unter den verschiedenen Bildgebungsmodi als Reaktion auf die Entscheidung dynamisch auszuwählen.

2. Laufzeiterfassungsschaltung nach Anspruch 1, wobei die Entscheidung darauf basiert, dass ein erster Bildgebungsmodus ein Kalibriermodus ist.

3. Laufzeiterfassungsschaltung nach Anspruch 2, wobei der Kalibriermodus eine Erfassung von Rauschen einschließt.

4. Laufzeiterfassungsschaltung nach Anspruch 3, wobei die Entscheidung auf einem zuvor bestimmten Pegel des erfassten Rauschens basiert.

5. Laufzeiterfassungsschaltung nach einem der Ansprüche 1 bis 4, wobei die Logikschaltung (11) ferner konfiguriert ist, um eine Bildgebungsmodussequenz zu entscheiden.

6. Laufzeiterfassungsschaltung nach Anspruch 5, wobei die Bildgebungsmodussequenz mindestens eine von einer zuvor bestimmten Sequenz, einer zufälligen Sequenz und einer periodischen Sequenz der verschiedenen Bildgebungsmodi einschließt.

7. Laufzeiterfassungsschaltung nach einem der Ansprüche 1 bis 6, wobei die verschiedenen Bildgebungsmodi einen Punktlaufzeitmodus, einen Gesamt-Frame-Modus, einen Binned-Frame-Modus, einen Infrarotmodus, einen zweidimensionalen Modus, einen Gesamtfeldmodus und einen Mosaikiert-Modus einschließen.

8. Laufzeiterfassungsschaltung nach einem der Ansprüche 1 bis 7, wobei die Entscheidung ferner eine Bestimmung eines Bildgebungsszenarios einschließt.

9. Laufzeiterfassungsschaltung nach Anspruch 8, wobei das Bildgebungsszenario mindestens eines von einem Lichtszenario und einem Dunkelszenario einschließt.

10. Verfahren zum Betreiben einer Laufzeiterfassungsschaltung (1) zum Erfassen von Bildinformationen in verschiedenen Bildgebungsmodi, wobei die Laufzeiterfassungsschaltung (1) eine Lichterfassungsschaltung (12) zum Erfassen von Licht und Ausgeben von Lichterfassungssignalen und eine Logikschaltung (11) zum Verarbeiten der Lichterfassungssignale von der Lichterfassungsschaltung (12) einschließt, das Verfahren umfassend:
Entscheiden eines Bildgebungsmodus unter den verschiedenen Bildgebungsmodi, wobei
die Logikschaltung (11) eine Sequenzerschaltung (17) und eine Registerschaltung (15) einschließt, wobei die Registerschaltung (15) mehrere Register zum Speichern von Daten, die auf der Basis der Lichterfassungssignale abgeleitet werden, einschließt und wobei jeder Bildgebungsmodus der verschiedenen Bildgebungsmodi auf einem zuvor bestimmten Satz von Registern basiert, das Verfahren ferner umfassend:
dynamisches Auswählen, durch die Sequenzerschaltung (17), eines Satzes von Registern zum Einstellen des Bildgebungsmodus unter den verschiedenen Bildgebungsmodi als Reaktion auf die Entscheidung.

11. Verfahren nach Anspruch 10, wobei die Entscheidung darauf basiert, dass ein erster Bildgebungsmodus ein Kalibriermodus ist, insbesondere
wobei der Kalibriermodus eine Erfassung von Rauschen einschließt, insbesondere
wobei die Entscheidung auf einem zuvor bestimmten Pegel des erfassten Rauschens basiert.

12. Verfahren nach Anspruch 10 oder 11, ferner umfassend das Entscheiden einer Bildgebungsmodussequenz, insbesondere
wobei die Bildgebungsmodussequenz mindestens eine von einer zuvor bestimmten Sequenz, einer zufälligen Sequenz und einer periodischen Sequenz der verschiedenen Bildgebungsmodi einschließt.

13. Verfahren nach einem der Ansprüche 10 bis 12, wobei die verschiedenen Bildgebungsmodi einen Punktlaufzeitmodus, einen Gesamt-Frame-Modus, einen Binned-Frame-Modus, einen Infrarotmodus, einen zweidimensionalen Modus, einen Gesamtfeldmodus und einen Mosaikiert-Modus einschließen.

14. Verfahren nach einem der Ansprüche 10 bis 13, wobei die Entscheidung ferner eine Bestimmung eines Bildgebungsszenarios einschließt.

15. Verfahren nach Anspruch 14, wobei das Bildgebungsszenario mindestens eines von einem Lichtszenario und einem Dunkelszenario einschließt.

## Revendications

1. Système de circuit de captage à temps de vol permettant de capter des informations d'image dans différents modes d'imagerie, comprenant :
un système de circuit de captage de lumière (12) permettant de détecter de la lumière et de délivrer en sortie des signaux de captage de lumière ; et
un système de circuit logique (11) permettant de traiter les signaux de captage de lumière provenant du système de circuit de captage de lumière (12), dans lequel le système de circuit logique (11) est configuré pour décider d'un mode d'imagerie parmi les différents modes d'imagerie, dans lequel le système de circuit logique (11) comporte un système de circuit de séquenceur (17) et un système de circuit de registres (15), dans lequel le système de circuit de registres (15) comporte de multiples registres permettant de stocker des données qui sont dérivées en fonction des signaux de captage de lumière et dans lequel chaque mode d'imagerie des différents modes d'imagerie est en fonction d'un ensemble prédéterminé de registres, et dans lequel le système de circuit de séquenceur (17) est conçu pour sélectionner dynamiquement un ensemble de registres permettant de régler le mode d'imagerie parmi les différents modes d'imagerie en réponse à la décision.

2. Système de circuit de captage à temps de vol selon la revendication 1, dans lequel la décision est en fonction d'un premier mode d'imagerie étant un mode d'étalonnage.

3. Système de circuit de captage à temps de vol selon la revendication 2, dans lequel le mode d'étalonnage comporte une détection de bruit.

4. Système de circuit de captage à temps de vol selon la revendication 3, dans lequel la décision est en fonction d'un niveau prédéterminé du bruit détecté.

5. Système de circuit de captage à temps de vol selon l'une quelconque des revendications 1 à 4, dans lequel le système de circuit logique (11) est configuré en outre pour décider d'une séquence de mode d'imagerie.

6. Système de circuit de captage à temps de vol selon la revendication 5, dans lequel la séquence de mode d'imagerie comporte au moins l'une parmi une séquence prédéterminée, une séquence aléatoire et une séquence périodique des différents modes d'imagerie.

7. Système de circuit de captage à temps de vol selon l'une quelconque des revendications 1 à 6, dans lequel les différents modes d'imagerie comportent un mode à temps de vol ponctuel, un mode plein cadre, un mode à combinaison de trames, un mode infrarouge, un mode bidimensionnel, un mode plein champ et un mode mosaïque.

8. Système de circuit de captage à temps de vol selon l'une quelconque des revendications 1 à 7, dans lequel la décision comporte en outre une détermination d'un scénario d'imagerie.

9. Système de circuit de captage à temps de vol selon la revendication 8, dans lequel le scénario d'imagerie comporte au moins l'un parmi un scénario clair et un scénario sombre.

10. Procédé destiné à faire fonctionner un système de circuit de captage à temps de vol (1) permettant de capter des informations d'image dans différents modes d'imagerie, dans lequel le système de circuit de captage à temps de vol (1) comporte un système de circuit de captage de lumière (12) permettant de détecter de la lumière et de délivrer en sortie des signaux de captage de lumière et un système de circuit logique (11) permettant de traiter les signaux de captage de lumière provenant du système de circuit de captage de lumière (12), le procédé comprenant :
le fait de décider d'un mode d'imagerie parmi les différents modes d'imagerie, dans lequel
le système de circuit logique (11) comporte un système de circuit de séquenceur (17) et un système de circuit de registres (15), dans lequel le système de circuit de registres (15) comporte de multiples registres permettant de stocker des données qui sont dérivées en fonction de signaux de captage de lumière et dans lequel chaque mode d'imagerie des différents modes d'imagerie est en fonction d'un ensemble prédéterminé de registres, le procédé comprenant en outre :
la sélection dynamique, par le système de circuit de séquenceur (17), d'un ensemble de registres permettant de régler le mode d'imagerie parmi les différents modes d'imagerie en réponse à la décision.

11. Procédé selon la revendication 10, dans lequel la décision est en fonction d'un premier mode d'imagerie étant un mode d'étalonnage, en particulier
dans lequel le mode d'étalonnage comporte une détection de bruit, en particulier
dans lequel la décision est en fonction d'un niveau prédéterminé du bruit détecté.

12. Procédé selon la revendication 10 ou 11, comprenant en outre le fait de décider d'une séquence de mode d'imagerie, en particulier
dans lequel la séquence de mode d'imagerie comporte au moins l'une parmi une séquence prédéterminée, une séquence aléatoire et une séquence périodique des différents modes d'imagerie.

13. Procédé selon l'une quelconque des revendications 10 à 12, dans lequel les différents modes d'imagerie comportent un mode à temps de vol ponctuel, un mode plein cadre, un mode à combinaison de trames, un mode infrarouge, un mode bidimensionnel, un mode plein champ et un mode mosaïque.

14. Procédé selon l'une quelconque des revendications 10 à 13, dans lequel la décision comporte en outre une détermination d'un scénario d'imagerie.

15. Procédé selon la revendication 14, dans lequel le scénario d'imagerie comporte au moins l'un parmi un scénario clair et un scénario sombre.
